(19) Europäisches Patentamt

European Patent Office

Office européen des brevets

(11) Publication number: **0 689 328 A2**

# EUROPEAN PATENT APPLICATION

(21) Application number: **95109005.9**

(22) Date of filing: **12.06.95**

(51) Int. Cl.⁶: **H04M 1/00**

(30) Priority: **20.06.94 GB 9412323**

(43) Date of publication of application:
**27.12.95 Bulletin 95/52**

(84) Designated Contracting States:
**DE FR IT SE**

(71) Applicant: **MOTOROLA, INC.**
**1303 East Algonquin Road**
**Schaumburg, IL 60196 (US)**

(72) Inventor: **Gay, Michael John**
**19 Ch de la Source**
**Coppet,**
**Vaud 1296 (CH)**
Inventor: **Dahl, Bjorn**
**Hostvedt**
**N-3640 Skollenborg (NO)**

(74) Representative: **Hirsz, Christopher Stanislaw et al**
**Motorola**
**European Intellectual Property**
**Midpoint**
**Alencon Link**
**Basingstoke,**
**Hampshire RG21 1PL (GB)**

(54) **Telephone line status detector circuit**

(57) A circuit (10) for detecting the status of equipment connected to a telephone line, the circuit comprising: a monitor resistor (R3) connected in series in one wire ("A") of the line; and a detection circuit (30, 40, 50) arranged to be powered (20) from the line and having response means (30) adapted to respond to the voltage developed across the monitor resistor for either line voltage polarity. Such a status detection circuit can easily cope with the fact that the telephone line voltage may be of either polarity, and with stringent isolation specifications. Such a status detection circuit can also be fabricated in integrated circuit (IC) form while complying with the need for the circuit to operate at voltages up to typically 250V for isolation testing.

*FIG.1*

EP 0 689 328 A2

## Background of the Invention

Modems, and other equipment which may be connected to a telephone line in parallel with other devices, require an indication of the status (in use, or not in use) of these devices. A device's status may be determined by monitoring the flow of current to the device. The current may be monitored by monitoring the voltage drop across a small resistor inserted in the telephone line.

In practice, the design of such a monitor circuit is complicated by the fact that the telephone line voltage may be of either polarity, and by isolation specifications which allow only a very small current to flow in the circuit when the line is nominally out of use.

The design of such a monitor circuit is further complicated when the monitor circuit is to be fabricated in integrated circuit (IC) form by the need for the circuit to operate at voltages up to typically 250V for isolation testing.

There is therefore a need for a monitor circuit which overcomes or at least alleviates the above disadvantages.

## Summary of the Invention

In accordance with tee invention there is provided a circuit for detecting the status of equipment connected to a telephone line, the circuit comprising:
a monitor resistor arranged to be connected in series in one wire of the line; and
a detection circuit arranged to be powered from the line and having response means adapted to respond to the voltage developed across the monitor resistor for either line voltage polarity.

Such a status detection circuit can easily cope with the fact that the telephone line voltage may be of either polarity, and with stringent isolation specifications. Such a status detection circuit can also be fabricated in integrated circuit (IC) form while complying with the need for the circuit to operate at voltages up to typically 250V for isolation testing.

## Brief Description of the Drawings

One telephone status detector circuit in accordance with the present invention will now be described, by way of example only, with reference to the accompanying drawings, in which:
FIG. 1 shows a block-schematic diagram of the telephone status detector circuit; and
FIG. 2 shows a more detailed circuit diagram of the telephone status detector circuit.

## Description of the Preferred Embodiment

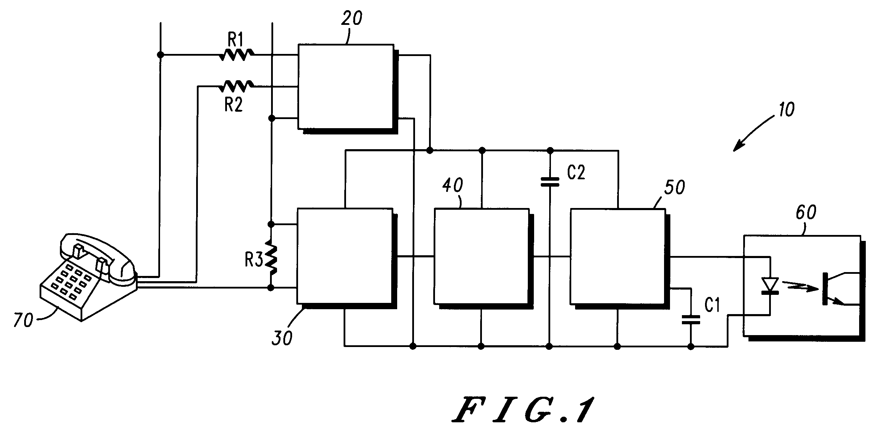

Referring now to FIG. 1, a telephone status detector circuit 10, suitable for fabrication in integrated circuit (IC) form, is connected to the "A" and "B" wires of a telephone line and to the "G" wire of telephones which are equipped with so-called data buttons. The detector circuit 10 includes a rectifier circuit 20 which is connected (i) to the "B" wire via a current-limiting resistor R1 (having a resistance of approximately 680KΩ), (ii) to the "G" wire via a series resistor R2 (having a resistance of approximately 3KΩ), and (iii) directly to the "A" wire.

The status detector circuit 10 also includes a detector circuit 30 which is connected across a monitor resistor R3 which is connected in series in the "A" wire. (having a resistance of approximately 5Ω). The detector circuit 10 further includes a trigger circuit 40 whose input is connected to the output of the detector circuit 30.

The status detector circuit 10 further includes a pulse generator 50 whose input is connected to the output of the trigger circuit 40 and whose output is connected to an optocoupler 60, and which includes a timing capacitor C1 (having a capacitance of approximately 1μF).

The rectifier circuit 20 is connected to power the circuits 30, 40 and 50 via a reservoir capacitor C2 (having a capacitance of approximately 0.22μF).

In use, the rectifier circuit 20 supplies current to the circuits 30, 40 and 50, unless a data button (not shown) is depressed with the phone 70 off-hook. The reservoir capacitor C2 will charge to near the line voltage when the phone is on-hook.

The phone status is monitored by the detector circuit 30 which is responsive to the voltage developed across the monitor resistor R3. The detector circuit 30 fires the trigger circuit 40 when the magnitude of the voltage developed across the monitor resistor R3 exceeds a predetermined threshold.

When fired, the trigger circuit 40 causes current to flow to the pulse generating circuit 50, which integrates the current (by charging the capacitor C1) and converts it to pulses to operate the light-generating diode of the optocoupler 60. The pulse rate is dependent on the line voltage but the first pulse is produced almost immediately following detection of line current, from the energy stored in the reservoir capacitor C2. The pulses merge into a continuous output when the data button (not shown) is depressed with the phone off-hook.

Since the "A" wire may be positive or negative, the monitor resistor's terminals may be near either the circuit's negative or positive supply line respectively. The detector circuit must operate in either condition. The detector circuit must also operate with a very low current consumption unless it detects that the other devices connected to the line are in use.

To satisfy these requirements, the detector circuit 10 uses a high impedance comparator coupled to the trigger circuit, which is in a zero current state unless the detection threshold is exceeded. The detection threshold is determined by the emitter area ratio of bipolar transistors to be independent of bias conditions. The circuits following the trigger circuit all have their bias controlled therefrom so that the they are also in a zero current state unless the detection threshold is exceeded. To allow operation with either polarity, the comparator and trigger circuit can be duplicated or the comparator can be designed to be bi-directional.

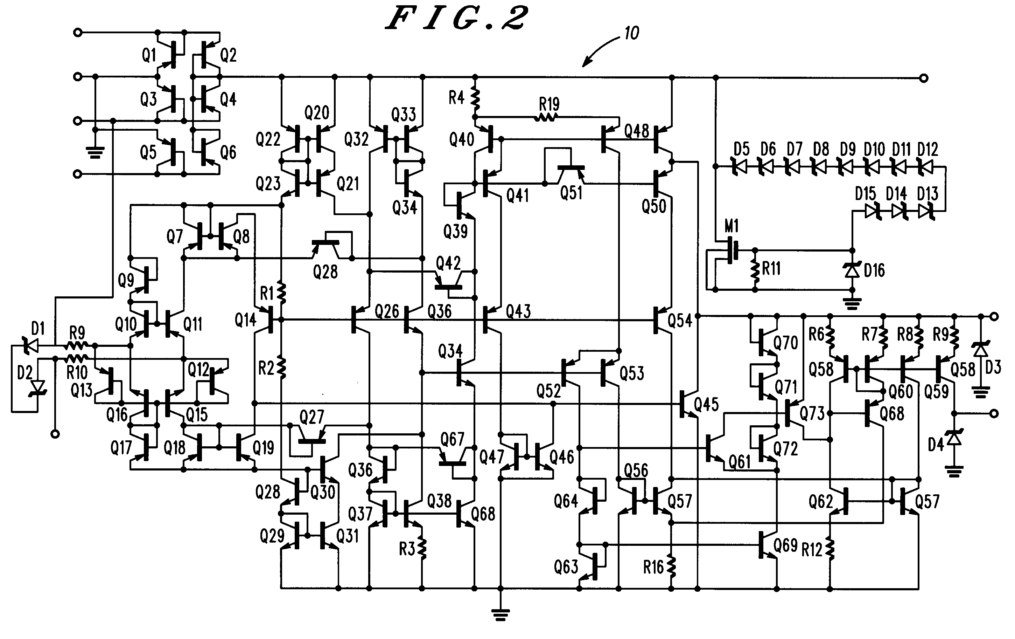

Referring now also to FIG. 2, in the preferred embodiment a bi-directional comparator is used, in which transistors Q10, Q11, Q7, Q8, Q9, Q14, Q28, Q29, Q30 & Q31 are active for a positive "A" wire, and transistors Q15, Q16, Q17, Q18, Q19, Q20, Q21, Q22 & Q23 are active for a negative "A" wire.

The trigger circuit 40 is formed by transistors Q32, Q33, Q34, Q26, Q35, Q36, Q37, Q38 and R3.

The transistors Q14, Q26 and Q35 are cascode elements which reduce the collector voltages on other transistors. The transistors Q7 & Q9, Q17 & Q18, Q23 & Q21, and Q28 & Q30 are anti-saturation clamps preventing saturation of transistors Q11, Q15, Q20 and Q31 respectively. Transistors Q12 and Q13 are protection devices.

If the "A" wire is positive and no current flows to the other devices, then a small amount will flow via transistors Q10, Q9, R1, R2, Q28 and Q29. The current through Q29 mirrored by Q31 will tend to fire the trigger circuit. This will be prevented, however, by Q11 which can supply a current much greater than that drawn by Q31 in a sense to prevent the trigger circuit from firing. Only when the current supplied by Q11 falls to that drawn by Q31 can the trigger circuit fire. This occurs for an input between the "A" wire and the sense input of

$$\frac{kT}{q}\ln 9,$$

the "9" being defined by the emitter ratios of transistors Q29, Q31 and Q10, Q11.

A similar argument applies for the "A" wire being negative.

When the trigger circuit is fired, it causes a current to flow in transistor Q68. This current passes via a cascode device Q24 to a current mirror Q40, Q41, Q48, Q49 which is coupled to the pulse generator circuit 50. The pulse generator circuit is only powered from the current mirror so, until the trigger circuit is fired, no current flows.

Thus, until the detection threshold is reached, the only current flowing in the circuit is that flowing in the comparator.

At very high voltages, the circuit will reach the breakdown voltage thresholds of the transistors. To respect the isolation specifications it is sufficient to make the value of the current-limiting resistor sufficiently large.

Thus, the circuit shown has an input impedance of 7.8MΩ nominal at low voltage. When used with a current-limiting resistor of 680KΩ, the impedance will be 8.4MΩ nominal below breakdown, and will respect the 6MΩ/100V specification for a 90V breakdown and the 1MΩ/250V specification for an 80V breakdown.

When the trigger circuit fires, the status detector circuit 10 can take current, and could reduce the supply voltage too low for correct operation of the pulse generator circuit. This is prevented by negative feedback loops from the collector electrode of transistor Q68 to the trigger circuit: when the "A" wire is positive, the negative feedback loop is established via transistor Q67 and when it is negative via transistor Q42. In each case the loop prevents the supply falling below $7V_{be}$.

It will be appreciated that such a status detection circuit can easily cope with the fact that the telephone line voltage may be of either polarity, and with stringent isolation specifications. It will also be appreciated that such a status detection circuit can also be fabricated in integrated circuit (IC) form while complying with the need for the circuit to operate at voltages up to typically 250V for isolation testing.

It will further be appreciated that various modifications or alternatives to the above described embodiment (for example by connecting the monitor resistor in the "B" wire instead of the "A" wire, and connecting the current-limiting resistor to the "A" wire instead of the "B" wire) will be apparent to a person skilled in the art without departing from the inventive concept.

**Claims**

1. A circuit for detecting the status of equipment connected to a telephone line, the circuit comprising:
   a monitor resistor arranged to be connected in series in one wire of the line; and
   a detection circuit arranged to be powered from the line and having response means adapted to respond to the voltage developed across the monitor resistor for either line voltage polarity.

2. A circuit according to claim 1 wherein the response means comprises a bi-directional comparator.

3. A circuit according to claim 1 or 2 wherein the detection circuit further comprises trigger means connected to receive an input from the response means.

4. A circuit according to claim 3 wherein the detection circuit further comprises pulse generator means connected to receive an input from the trigger means.

5. A circuit according to any preceding claim wherein only the response means is arranged to consume current unless the magnitude of the voltage across the monitor resistor exceeds a predetermined threshold.

6. A circuit according to any preceding claim wherein current drawn by the circuit is limited by a current-limiting resistor arranged to be connected between the circuit and a wire of the line other than that containing the monitor resistor.

FIG.1

FIG.2

EP 0 689 328 A2